# EUROPEAN PATENT APPLICATION

(11) **EP 0 588 440 A1**
(43) Date of publication of application: **23.03.1994**
(21) Application number: 93202687.5
(22) Date of filing: 16.09.1993
(51) Int. Cl.: B01J 29/08, C10G 47/16

(54) **Hydrocarbon conversion catalysts**

(30) Priority: 17.09.1992 EP 92202855
(71) Applicant: SHELL INTERNATIONALE RESEARCH MAATSCHAPPIJ B.V., NL-2596 HR Den Haag (NL)
(72) Inventor: van Veen, Johannes Anthonius Robert, NL-1031 CM Amsterdam (NL)

(57) **Abstract**

Composition of matter suitable as catalyst base in hydroprocessing comprising a crystalline aluminosilicate and a binder wherein the crystalline aluminosilicate comprises a modified Y zeolite having a unit cell size below 24.37 Å, a water adsorption capacity (at 25 °C and a p/p₀ value of 0.2) of at least 8% by weight of modified Y zeolite, a pore volume of at least 0.25 ml/g wherein between 10% and 60% of the total pore volume is made up of pores having a diameter of at least 8 nm, which modified Y zeolite has an absorbance ratio of at most 0.040, expressed as the absorbance in the infra-red frequency region of 3670 ± 10 cm⁻¹ divided by the absorbance in the infra-red frequency region of 3630 ± 10 cm⁻¹.

The invention further relates to hydroconversion catalysts and processes based on such hydroconversion catalysts.

## Description

The present invention relates to compositions of matter suitable as catalyst base in hydroprocessing. The present invention also relates to catalyst compositions which can suitably be used in hydrocarbon conversion processes, in particular hydrocracking processes, and hydrocarbon conversion processes wherein use is made of such catalyst compositions.

Of the many hydroconversion processes known in the art, hydrocracking is becoming increasingly important since it offers product flexibility together with product quality. As it is also possible to subject rather heavy feedstocks to hydrocracking it will be clear that much attention has been devoted to the development of hydrocracking catalysts.

Whereas in the past catalytic hydrocracking was aimed primarily at the production of lower boiling points products such as gasoline, nowadays hydrocracking is often aimed at meeting the increasing demand for high quality middle distillate products.

Therefore, the object in nowadays hydrocracking is to provide a hydrocracking catalyst having a high selectivity towards middle distillates and in addition a high activity and stability.

To this end modern hydrocracking catalysts are generally based on zeolitic materials which may have been adapted by techniques like ammonium-ion exchange and various forms of calcination in order to improve the performance of the hydrocracking catalysts based on such zeolitic materials.

One of the zeolites which is considered to be a good starting material for the manufacture of hydrocracking catalysts is the well-known synthetic zeolite Y as described in US-A-3,130,007. A number of modifications has been reported for this material which include, inter alia, ultrastable Y (US-A-3,536,605) and ultrahydrophobic Y (GB-A-2,014,970). In general, it can be said that the modifications cause a reduction in the unit cell size depending on the treatment carried out.

In EP-B-247679 compositions of matter have been described which can very attractively be used as components for hydrocracking catalysts.

Surprisingly, it has now been found that even more attractive results can be obtained in terms of gas make and middle distillate yield when use is made of a composition comprising a binder and a modified Y zeolite having a specific infrared feature.

Accordingly, the present invention relates to a composition of matter suitable as catalyst base in hydroprocessing comprising a crystalline aluminosilicate and a binder wherein the crystalline aluminosilicate comprises a modified Y zeolite having a unit cell size below 24.37 Å, a water adsorption capacity (at 25 °C and a p/p₀ value of 0.2) of at least 8% by weight of modified Y zeolite, a pore volume of at least 0.25 ml/g wherein between 10% and 60% of the total pore volume is made up of pores having a diameter of at least 8 nm, which modified Y zeolite has an absorbance ratio of at most 0.040, expressed as the absorbance in the infrared frequency region of 3670 ± 10 cm⁻¹ divided by the absorbance in the infra-red frequency region of 3630 ± 10 cm⁻¹.

Preferably, the absorbance ratio is at most 0.03, more preferably at most 0.02.

The infrared bands have been determined by means of in-situ cell measurements of dry samples at elevated temperature (450°C).

Preferably, the modified Y zeolite has a unit cell size ranging from 24.27 to 24.35 Å, more preferably from 24.29 to 24.33 Å.

Preferably, between 10% and 40% of the total pore volume of the modified Y zeolite is made up of pores having a diameter of at least 8 nm.

Suitably, the modified Y zeolite has a water adsorption capacity of 8-12% by weight of modified zeolite.

The pore diameter distribution and the water adsorption capacity can suitably be determined by the methods as described in EP-B-247679, which is herein incorporated by reference.

Preferably, the modified Y zeolite has a SiO₂/Al₂O₃ molar ratio of from 4 to 25, more preferably of from 8 to 15.

The compositions of matter according to the present invention suitably comprise 5-90% by weight of modified Y zeolite and 10-95% by weight of binder. In a particular embodiment the compositions of matter comprise rather high amounts of modified Y zeolite: 50-85% by weight of modified Y zeolite and 15-50% by weight of binder being preferred.

Suitably, the compositions of matter according to the present invention comprise in addition an amorphous cracking component. Suitably, such a composition of matter comprises 50-90% by weight of modified Y zeolite and amorphous cracking component and 10-50% by weight of binder, preferably 60-85% by weight of modified Y zeolite and amorphous cracking component and 15-40% by weight of binder. Suitably, the amount of modified Y zeolite ranges between 5 and 95%, preferably between 10 and 75%, of the combined amount of modified Y zeolite and amorphous cracking component. Suitably, silica-based amorphous cracking components can be used. Preference is given to silica-alumina as amorphous cracking component. In another embodiment use can be made of a dispersion of silica-alumina in an alumina matrix as amorphous cracking component. When use is made of such an amorphous cracking component the composition of matter according to the present invention suitably comprises less than 25% by weight of the modified Y zeolite, more than 25% by weight of binder and in addition at least 30% by weight of the dispersion of silica-alumina in an alumina matrix.

Suitably, the composition of matter comprises at least 30% by weight of binder.

Preference is given to compositions of matter comprising less than 15% by weight of the modified Y zeolite.

Preferably, the composition of matter has a binder/modified Y zeolite weight ratio in the range of 2-40.

Suitably, the composition of matter comprises 40-70% by weight of the dispersion.

Suitably, the alumina matrix comprises a transitional alumina matrix, preferably a gamma-alumina matrix.

The binder(s) present in the compositions of matter according to the present invention suitably comprise an inorganic oxide or a mixture of inorganic oxides. Both amorphous and crystalline binders can be applied. Examples of suitable binders comprise alumina, magnesia, titania and clays. If desired, small amounts of other inorganic oxides such as zirconia, titania, magnesia and silica may be present. Alumina is a preferred binder. Suitably, the modified Y zeolite has a degree of crystallinity which is at least retained at increasing SiO₂/Al₂O₃ molar ratios (relative to a certain standard, e.g. Na-Y). Generally, the crystallinity will slightly improve when comparing modified Y zeolites with increasing SiO₂/Al₂O₃ molar ratios.

The present invention further relates to a catalyst composition comprising in addition to the composition of matter as defined hereinbefore at least one hydrogenation component of a Group VI metal and/or at least one hydrogenation component of a Group VIII metal. Suitably, the catalyst composition according to the present invention comprises one or more components of nickel and/or cobalt and one or more components of molybdenum and/or tungsten or one or more components of platinum and/or palladium.

The amount(s) of hydrogenation component(s) in the catalyst composition suitably ranges between 0.05 and 10% by weight of Group VIII metal component(s) and between 2 and 40% by weight of Group VI metal component(s), calculated as metal(s) per 100 parts by weight of total catalyst. The hydrogenation components in the catalyst composition may be in the oxidic and/or sulphidic form, in particular in the sulphidic form. If a combination of at least a Group VI and a Group VIII metal component is present as (mixed) oxides, it will normally be subjected to a sulphiding treatment prior to proper use in hydrocracking.

The compositions of matter in accordance with the present invention are particularly useful in certain hydroconversion processes, in particular hydrocracking processes.

The present invention, therefore, also relates to a process for converting hydrocarbon oils into products of lower average molecular weight and lower average boiling point comprising contacting a hydrocarbon oil at elevated temperature and pressure in the presence of hydrogen with a catalyst composition as described hereinbefore.

Suitable process conditions for the hydroconversion process comprise temperatures between 250 and 500 °C, partial hydrogen pressures of up to 300 bar and space velocities between 0.1 and 10 kg feed per litre catalyst per hour (kg/l/hr). Gas/feed ratios between 100 and 5000 Nl/kg can suitably be applied. Preferably, the hydroconversion process is carried out at a temperature between 300 and 450 °C, a partial hydrogen pressure between 25 and 200 bar and a space velocity between 0.2 and 5 kg feed per litre catalyst per hour. Preferably, gas/feed ratios are applied between 250 and 2000 Nl/kg.

Feedstocks which can suitably be subjected to a hydroconversion process using a catalyst according to the present invention comprise gas oils, deasphalted oils, coker gas oils and other thermally cracked gas oils and syncrudes, optionally originating from tar sands, shale oils, residue upgrading processes or biomass. Combinations of various feedstocks can be applied.

It may be desirable to subject part or all of the feedstock to one or more (hydro)treatment steps prior to its use in the hydroconversion process. It is often convenient to subject the feedstock to a (partial) hydrotreatment. The catalyst to be applied in such a hydrotreatment is suitably an amorphous hydrocracking catalyst which contains at least one metal of Group VI and/or at least one metal of Group VIII on an amorphous carrier. In an attractive embodiment of such a hydrotreatment use is made of two reaction zones arranged in series whereby the complete effluent from the first reaction zone can be passed to the second reaction zone. The first reaction zone comprises a first amorphous hydrocracking catalyst as described hereinbefore and the second reaction zone comprises a second, zeolitic hydrocracking catalyst which contains at least one metal of Group VI and/or at least one metal of Group VIII. Preferably, the zeolitic catalyst comprises a catalyst composition in accordance with the invention. In this way a very attractive hydrotreatment of a feedstock is established. Therefore, the present invention also relates to a process for the hydrotreatment of a hydrocarbonaceous feedstock comprising contacting said feedstock in the presence of hydrogen with a first amorphous hydrocracking catalyst which contains at least one metal of Group VI and/or at least one metal of Group VIII on an amorphous carrier in a first reaction zone passing at least part of the effluent from the first reaction zone, preferably the complete effluent, to a second reaction zone and contacting in the second reaction zone said effluent from the first reaction zone in the presence of hydrogen at elevated temperature and pressure with a second, zeolitic catalyst which comprises any composition of matter in accordance with the present invention as defined hereinabove and at least one hydrogenation component of a Group VI metal and/or at least one hydrogenation component of a Group VIII metal.

It is evident that the first reaction zone may comprise one or more beds of the alumina-containing catalyst and also the second reaction zone may contain one or more beds of the zeolitic catalyst. It is also evident that the first and second reactor zone or zones may be located in one or more reactors. Preferably, the reaction zones are arranged in a stacked-bed configuration. The hydrotreatment and the process according to the present invention can also suitably be carried out in reactors in series or in a stacked-bed configuration.

The reactor effluent so obtained can suitably be subjected to a further hydrocracking process, preferably to a process in accordance with the present invention.

The present invention will now be illustrated by means of the following Example.

### Example

### a) Preparation of a catalyst according to the present invention

77.7 g of a modified Y zeolite (ex-PQZ) having a unit cell size of 2.431 nm, a SiO₂/Al₂O₃ molar ratio of 9.8, a water adsorption capacity (at 25 °C and a p/p₀ value of 0.2) of 11.2% by weight, a nitrogen pore volume of 0.42 ml/g wherein 30% of the total pore volume is made up of pores having a diameter of at least 8 nm, a loss of ignition of 11% by weight and a 3670 cm⁻¹/3630 cm⁻¹ infrared absorbance ratio of less than 0.01 was mixed with 24 g of hydrated aluminium oxide (ex-Criterion). Subsequently, 36.12 g of a NiW solution (ex-Starck: 6% by weight Ni, 23% by weight W), 3.41 g of a nickel nitrate solution (14% by weight Ni) and 43.02 g of water were added to the powdery mixture. After mulling the mixture obtained it was extruded in a small Bonnot extruder provided with a die plate producing 1.5 mm extrudates. The extrudates obtained were dried for 2 hours at 120 °C and finally calcined for 2 hours at 500 °C. The extrudates obtained had a mercury pore volume of 0.61 ml/g. They contained 2.6% by weight of nickel and 8.2% by weight of tungsten. The ready catalyst contained 80% by weight of modified Y zeolite and 20% by weight of binder (based on total amount of zeolite and binder on a dry basis).

### b) Hydrocracking experiment.

The catalyst obtained was subjected to a hydrocracking performance test involving a hydrotreated heavy vacuum gas oil having the following properties:

| | |
|---|---|
| C (%wt) | 86.2 |
| H (%wt) | 13.8 |
| d (70/4) | 0.826 |
| viscosity (100 °C) | 4.87 cS (ASTM-D-445) |
| viscosity (60 °C) | 12.43 cS (ASTM-D-445) |
| RCT (%wt) | 0.05 (ASTM-D-542) |
| I.B.P. (°C) | 205 °C |
| 10/20 | 332/370 |
| 30/40 | 392/410 |
| 50/60 | 428/448 |
| 70/80 | 467/492 |
| 90 | 525 |
| F.B.P. | 598 |

The catalyst was firstly subjected to a presulphiding treatment by slowly heating in a 10 %v H₂S/H₂-atmosphere to a temperature of 370 °C. The catalyst was tested in a 1:1 dilution with 0.2 mm SiC particles under the following operating conditions: WHSV of 1.1 kg/l/h, H₂S partial pressure of 1.4 bar, total pressure of 130 bar and a gas/feed ratio of 1,000 Nl/kg. The experiment was carried out in once-through operation.
When operating the hydrocracking in a kerosene mode of operation, the catalyst performance is expressed at 70% by weight conversion of 300 °C⁺ boiling point material in the feed after allowing the catalyst to stabilize.

The following results were obtained with the catalyst:
Temperature required (70% conv. of 300 °C⁺): 328 °C
Distribution of 300 °C ⁻ product (in % by weight):

| | |
|---|---|
| C₁ -C₄ | 6 |
| C₅ - 130 °C | 43 |
| 130 °C - 300 °C | 51 |

The chemical hydrogen consumption amounted to 1.2% by weight.

### Comparative Example

A modified Y zeolite known from EP-B-247679 and having a unit cell size of 24.33 Å, a SiO₂/Al₂O₃ molar ratio of 9.85, a water adsorption capacity (at 25 °C and a p/p₀ value of 0.2) of 11.3% by weight, a nitrogen pore volume of 0.40 ml/g wherein 18% of the total pore volume is made up of pores having a diameter of at least 8 nm, a loss of ignition of 14.1% by weight and a 3670 cm⁻¹/3630 cm⁻¹ infrared absorbance ratio of 0.043 was treated with hydrated aluminium oxide (ex-Criterion) and a solution of nickel nitrate and ammonium metatungstate so as to obtain a catalyst containing 2.6% by weight of nickel and 8.2% by weight of tungsten. The ready catalyst contained 77.5% by weight of modified Y zeolite and 22.5% by weight of binder (based on total amount of zeolite and binder on a dry basis).

The comparative catalyst was subjected to a presulphiding treatment as described in the Example and subjected to the same feed. When operating the hydrocracking in a kerosene mode (i.e. expressing catalyst performance at 70% by weight conversion of 300 °C⁺ boiling point material in the feed) after allowing the catalyst to stabilize, the following results were obtained:
Temperature required (70% conv. of 300 °C⁺): 318 °C
Distribution of 300 °C⁻ product (in % by weight):

| | |
|---|---|
| C₁ - C₄ | 7 |
| C₅ - 130 °C | 46 |
| 130 °C - 300 °C | 47 |

The chemical hydrogen consumption amounted to 1.2% by weight.

It will be clear from the above that the catalyst in accordance with the present invention is more attractive in terms of gas make and middle distillate yield than the catalyst known from EP-B-247679.

## Claims

1. Composition of matter suitable as catalyst base in hydroprocessing comprising a crystalline aluminosilicate and a binder wherein the crystalline aluminosilicate comprises a modified Y zeolite having a unit cell size below 24.37 Å, a water adsorption capacity (at 25 °C and a p/p₀ value of 0.2) of at least 8% by weight of modified Y zeolite, a pore volume of at least 0.25 ml/g wherein between 10% and 60% of the total pore volume is made up of pores having a diameter of at least 8 nm, which modified Y zeolite has an absorbance ratio of at most 0.040, expressed as the absorbance in the infra-red frequency region of 3670 ± 10 cm⁻¹ divided by the absorbance in the infra-red frequency region of 3630 ± 10 cm⁻¹.

2. Composition according to claim 1, wherein the absorbance ratio is at most 0.03.

3. Composition according to claim 1 or 2, wherein the unit cell size ranges from 24.27 to 24.35 Å.

4. Composition according to claim 3, wherein the unit cell size ranges from 24.29 to 24.33 Å.

5. Composition according to any one of claims 1-4, wherein between 10% and 40% of the total pore volume of the modified Y zeolite is made up of pores having a diameter of at least 8 nm.

6. Composition according to any one of claims 1-5, wherein the modified Y zeolite has a water adsorption capacity of 8-12% by weight of modified Y zeolite.

7. Composition according to any one of claims 1-6, wherein the modified Y zeolite has a SiO₂/Al₂O₃ molar ratio of from 4 to 25.

8. Composition according to claim 8, wherein the modified Y zeolite has a SiO₂/Al₂O₃ molar ratio of from 8 to 15.

9. Composition according to any one of claims 1-8, wherein the composition comprises 5-90% by weight of modified Y zeolite and 10-95% by weight of binder.

10. Composition according to any one of claims 1-9, wherein the binder comprises an inorganic oxide or a mixture of inorganic oxides.

11. Catalyst composition comprising a binder, a modified Y zeolite according to any one of claims 1-10 and at least one hydrogenation component of a Group VI metal and/or at least one hydrogenation component of a Group VIII metal.

12. Catalyst composition according to claim 11, wherein the hydrogenation component comprises one or more components of nickel and/or cobalt and one or more components of molybdenum and/or tungsten or one or more components of platinum and/or palladium.

13. Catalyst composition according to claim 12, wherein the hydrogenation component comprises between 0.05 and 10% by weight of nickel and between 2 and 40% by weight of tungsten, calculated as metals per 100 parts by weight of total catalyst.

14. Catalyst composition according to any one of claims 11-13, wherein the hydrogenation component(s) is (are) present in the sulphided form.

15. Process for converting hydrocarbon oils into products of lower average molecular weight and lower average boiling point comprising contacting a hydrocarbon oil at elevated temperature and pressure in the presence of hydrogen with a catalyst composition according to any one of claims 11-14.

16. Process according to claim 15, which is carried out at a temperature in the range of from 250 °C to 500 °C, a partial hydrogen pressure up to 300 bar and a space velocity between 0.1 and 10 kg feed per litre of catalyst per hour.

17. Process according to claim 16, which is carried out at a temperature between 300 °C and 450 °C, a hydrogen partial pressure of 25 and 200 bar and a space velocity between 0.2 and 5 kg feed per litre of catalyst per hour.
